Europäisches Patentamt

European Patent Office

Office européen des brevets

(19)

(11) Numéro de publication: **0 246 949 B1**

# FASCICULE DE BREVET EUROPEEN

(12)

(45) Date de publication du fascicule du brevet:
**08.08.90**

(51) Int. Cl.⁵: **B64C 25/60**

(21) Numéro de dépôt: **87401042.4**

(22) Date de dépôt: **07.05.87**

---

(54) Atterrisseur d'aéronef à poutre basculante et à encombrement réduit.

---

(30) Priorité: **13.05.86 FR 8606817**

(43) Date de publication de la demande:
**25.11.87 Bulletin 87/48**

(45) Mention de la délivrance du brevet:
**08.08.90 Bulletin 90/32**

(84) Etats contractants désignés:
**DE ES FR GB IT NL SE**

(56) Documents cités:
**GB-A- 709 340**
**US-A- 2 670 160**

(73) Titulaire: **MESSIER-HISPANO-BUGATTI (S.A), 5, rue Louis Lejeune, F-92120 Montrouge(FR)**

(72) Inventeur: **Veaux, Jacques, 16 boulevard de la Liberté, F-92320 Chatillon(FR)**
Inventeur: **Derrien, Michel, 14 bis rue du Parc de Clagny, F-78000 Versailles(FR)**

(74) Mandataire: **Fruchard, Guy et al, CABINET BOETTCHER 23, rue la Boétie, F-75008 Paris(FR)**

ACTORUM AG

## Description

L'invention a pour objet un atterrisseur principal pour aéronef du type à boggie ou à tandem ayant une grande longueur lorsque l'aéronef est en position cabrée et une longueur réduite d'une part pendant les évolutions de l'aéronef au sol et d'autre part pour son escamotage à l'intérieur de l'aéronef. Les atterrisseurs à boggie ou à tandem déjà connus comprennent essentiellement un caisson attaché à l'aéronef à l'intérieur duquel est disposé un amortisseur principal; une poutre articulée par son milieu à l'extémité de l'amortisseur principal supporte à une extrémité des moyens de roulement avant et à l'autre extrémité des moyens de roulement arrière. Un amortisseur, disposé entre le milieu de la poutre et l'un des moyens de roulement et que les spécialistes appellent "amortisseur de tangage" permet de contrôler le mouvement de rotation de la poutre.

Dans le cas des aéronefs ayant un long fuselage, la condition de décollage à l'angle de cabré maximum impose une grande longueur de l'atterrisseur principal. Cette longueur est supérieure à celle qui serait strictement nécessaire pour conserver pendant les évolutions de l'aéronef au sol une distance suffisante (appelée garde) entre l'aéronef et le sol.

Cet allongement des atterrisseurs principaux entraîne un allongement de l'atterrisseur auxiliaire avant, afin de conserver l'assiette correcte (sensiblement horizontale) de l'aéronef lorsqu'il roule sur le sol.

Ces allongements des atterrisseurs principaux et auxiliaire avant entraînent, d'une part l'augmentation de leur longement à l'intérieur de l'aéronef, et, d'autre part une augmentation de leurs masses.

De plus, ce type d'atterrisseur principal utilise deux amortisseurs, un amortisseur principal et un amortisseur de tangage.

On connaît également, notamment du document US-A 2 670 160, des atterrisseurs selon le préambule de la revendication 1 comportant un caisson lié à la structure de l'aéronef, un cylindre creux monté pour coulisser à l'intérieur du caisson et relié à celui-ci par un compas, ce cylindre creux étant relié de façon articulée à son extrémité inférieure en un premier point d'articulation à une poutre basculante munie de trains de roues à chacune de ses extrémités, et un amortisseur disposé dans le caisson et ayant une première extrémité fixée au caisson et une seconde extrémité reliée à la poutre basculante par une biellette articulée à cette seconde extrémité et en un second point d'articulation de la poutre basculante disposé en arrière du premier point d'articulation selon un sens de déplacement de l'aéronef.

Un tel atterrisseur assure un positionnement prédéterminé de la poutre avant l'atterrissage mais n'assure en aucune façon la fonction d'amortisseur de tangage en raison de l'indétermination de la position du cylindre creux en dehors de sa position de détente totale.

Un premier but de l'invention est de réaliser un atterrisseur à poutre basculante comportant des moyens assurant non seulement l'amortissement principal des mouvements verticaux de l'avion mais également l'amortissement des mouvements de tangage résultant du pivotement de la poutre basculante autour de ses axes d'articulation.

Un autre but de la présente invention est de réaliser un atterrisseur du type mentionné ci-dessus dont la poutre basculante puisse être ramenée dans une position déterminée lors de son logement à l'intérieur de l'aéronef.

En vue de la réalisation du premier but selon l'invention, on prévoit un atterrisseur pour aéronef comportant un caisson lié à la structure de l'aéronef, un cylindre creux monté pour coulisser à l'intérieur du caisson par une première extrémité et ayant une seconde extrémité en saillie par rapport au caisson, cette seconde extrémité étant reliée de façon articulée en un premier point d'articulation à une poutre basculante munie de moyens de roulement à chacune de ses extrémités, et des moyens d'amortissement télescopiques disposés dans le caisson et ayant une première extrémité reliée à la structure de l'avion et une seconde extrémité reliée à la poutre basculante par une biellette articulée à cette seconde extrémité des moyens d'amortissement et en un second point d'articulation de la poutre basculante disposé en arrière du premier point d'articulation selon un sens de déplacement de l'aéronef, cette seconde extémité des moyens d'amortissement pouvant prendre appui sur le cylindre creux au voisinage de la seconde extrémité de celui-ci, caractérisé en ce que les moyens d'amortissement comprennent une tige plongeuse montée au voisinage de la première extrémité du cylindre creux et un piston relié à la biellette et coulissant de façon étanche dans le cylindre creux au voisinage de la seconde extrémité de celui-ci, le piston, la tige plongeuse le caisson et le cylindre creux déterminant au moins une chambre fermée variable en fonction des déplacements du cylindre creux et du piston, cette chambre ayant au moins un volume à fluide compressible coopérant avec au moins un volume respectif à fluide incompressible, et des moyens de laminage portés par un premier diaphragme s'étendant en travers de la chambre à une extrémité de la tige plongeuse engagée dans le volume de fluide incompressible.

En vue de la réalisation du second but selon l'invention, on prévoit un atterrisseur du type mentionné ci-dessus dans lequel la tige plongeuse est mobile selon une direction longitudinale du caisson et à une extrémité reliée à la structure de l'avion par des moyens de rétraction.

L'atterrisseur conforme à l'invention a lors de l'atterrissage un premier mode de fonctionnement (mode à levier) pendant lequel la poutre pivote autour de son point d'articulation sous l'effet du contact au sol des moyens de roulement arrière; le piston agit seul pendant ce mode de fonctionnement. Lorsque tous les moyens de roulement ont pris contact avec le sol, l'atterrisseur a un second mode de fonctionnement (mode direct) pendant lequel les moyens d'amortissement travaillent selon le déplacement du cylindre creux par rapport à la tige plongeuse. Au cours du roulage au sol, le piston intervient seulement comme amortisseur de tangage pour contrôler le pivotement ou le tangage de la poutre provoqué par les mouvements de tangage de l'aéronef ou les aspérités du sol.

La disposition particulière de la tige plongeuse et du piston pénétrant un cylindre creux à chacune de ses extrémités permet d'obtenir les avantages de moyen d'amortissement unique et compact.

Pendant le décollage, les modes de fonctionnement de l'atterrisseur sont inversées ; l'atterrisseur passe du mode direct au mode à levier. Lors de ce dernier mode, les moyens du roulement arrière supportent seuls l'aéronef. Les moyens d'amortissement, du fait d'un effort de seuil suffisant, assurent une garde au sol suffisante de l'aéronef pendant la position cabrée de celui-ci. On comprend que l'atterrisseur est avantageusement allongé du fait que la poutre n'est pas articulée en son milieu mais entre ce dernier et les moyens de roulement avant ; cette disposition n'entraîne pas une augmentation du logement à l'intérieur de l'aéronef car les moyens de rétraction font venir la poutre dans une position sensiblement perpendiculaire à l'axe longitudinal de l'atterrisseur.

Egalement, lorsque les moyens de roulement avant et arrière sont en contact avec le sol, les points d'articulations de la poutre et de la bielle liée au piston peuvent être disposés de telle façon que l'on peut obtenir un effort identique sur les moyens de roulement avant et arrière, comme on le montrera plus loin en détail.

D'autres avantages apparaîtront au cours de la description qui suit d'un premier mode de réalisation préféré de réalisation et d'une variante, d'un second mode préféré de réalisation de l'invention et d'une variante des moyens d'amortissement, à titre d'exemples non limitatifs en référence aux dessins annexés dans lesquels :

- la figure 1 est une vue en coupe longitudinale de l'atterrisseur conforme à l'invention selon un premier mode préféré de réalisation, en position "train sorti", les moyens de roulement avant et arrière n'étant représentés que schématiquement,
- la figure 2 est une vue de l'atterrisseur selon le premier mode préféré de réalisation, en contact avec le sol par ses moyens de roulement arrière,
- la figure 3 est une vue de l'atterrisseur selon le premier mode préféré de réalisation, en contact avec le sol par ses moyens de roulement avant et arrière,
- la figure 4 est une vue de l'atterrisseur selon le premier mode préféré de réalisation lors de sa rétraction, au relevage,
- la figure 5 est une vue d'une variante du premier mode préféré de réalisation de l'atterrisseur,
- la figure 6 est une vue d'un second mode préféré de réalisation de l'atterrisseur,
- la figure 7 est un graphique montrant en ordonnée, l'effort F appliqué au centre des moyens de roulement en fonction de leur course h portée en abscisse,

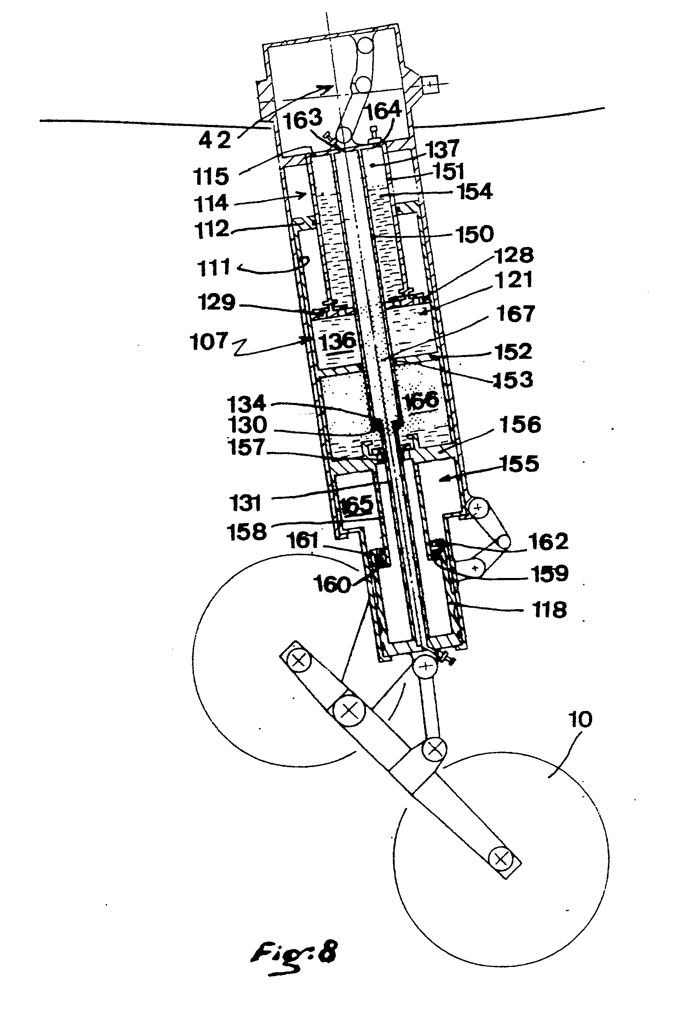

- la figure 8 est une vue en coupe analogue à la figure 1 d'une variante de réalisation des moyens d'amortissement, l'atterrisseur étant représenté en position "train sorti".

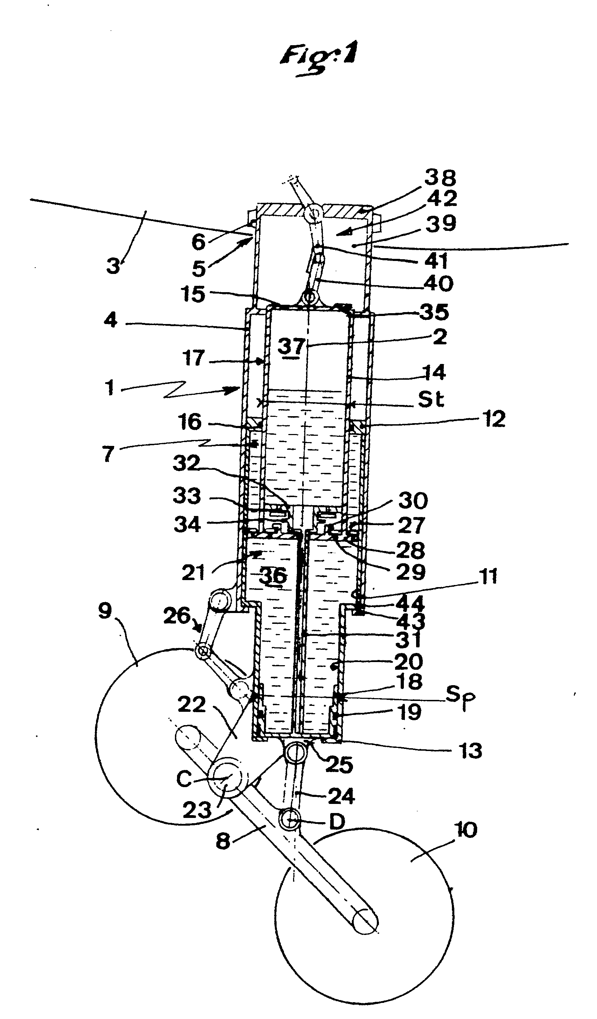

Les figures 1 à 4 représentent le même atterrisseur dans des positions différentes. Sur la figure 1, cet atterrisseur 1 d'axe longitudinal 2 est associé à un aéronef 3 représenté par une partie de sa structure.

L'atterrisseur comprend un caisson 4 dont une extrémité 5 est montée pivotante sur la structure de l'aéronef 3 par des moyens d'attache 6 connus en soi. Ce caisson 4 contient partiellement des moyens d'amortissement 7 qui ont une extrémité inférieure en saillie en dessous de ce caisson par rapport à l'aéronef. A cet extrémité inférieure est articulée une poutre 8 équipée à une extrémité avant de moyens de roulement avant 9 et à son extrémité arrière de moyens de roulement arrière 10.

Les moyens d'amortissement 7 sont constitués par un cylindre creux 11 contenu partiellement dans le sens de la longueur à l'intérieur du caisson, une première extrémité 12 étant à l'intérieur du caisson et une seconde extrémité 13, à l'extérieur dudit caisson.

Une tige creuse plongeuse 14 de section St terminée par une paroi 15 traverse la première extrémité 12 ; cette dernière coulisse par un joint d'étanchéïté 16 sur la face extérieure 17 de section St de la tige plongeuse 14.

La seconde extrémité 13 du cylindre creux 11 contient un piston 18 de section Sp muni d'un joint d'étanchéïté 19 qui est apte à coulisser de façon étanche le long de la face interne 20 du cylindre creux 11.

Le cylindre creux 11 entre sa première extrémité 12 étanche et le piston 18 et, la tige plongeuse 14 par sa paroi 15, délimitent une chambre 21 fermée, variable en fonction des déplacements de la tige plongeuse et du piston.

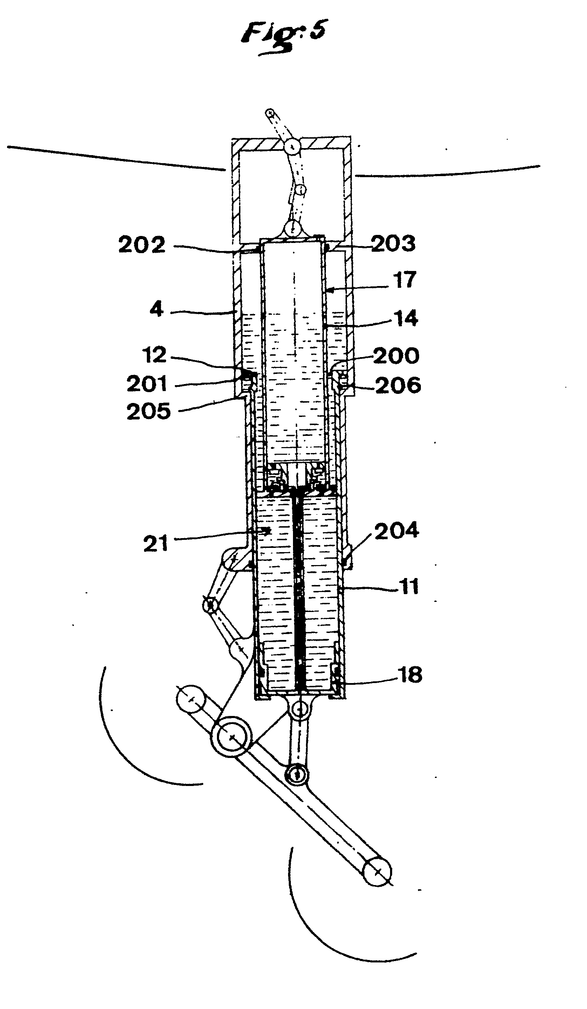

On remarquera que la chambre fermée 21 peut être aussi définie par le piston 18, la tige plongeuse 14, le cylindre creux 11 et une partie du caisson 4 (figure 5) ; dans cette variante de ce premier mode préféré de réalisation, l'extrémité 12 du cylindre creux 11 ne coopère plus de façon étanche avec la face extérieure 17 de la tige plongeuse 14. Cette extrémité 12 a une ouverture 200 et est munie de moyens de laminage 201 agissant lors de la détente des moyens d'amortissement comme il est bien connu. L'étanchéïté est alors assurée d'une part par un joint d'étanchéïté 202 disposé sur une portion 203 du caisson 4 en contact avec la face extérieure 17 de la tige plongeuse 14 et d'autre part, par un joint d'étanchéïté 204 disposé sur la partie basse du caisson 4. Le cylindre creux 11 est maintenu longitudinalement par exemple, par un épaulement 205 du caisson 4 qui coopère avec une butée 206 réalisée sur le cylindre creux.

Le cylindre creux 11 dans sa seconde extrémité 13 est pourvu d'un organe d'articulation 22 tel qu'une crosse; celle-ci s'étend vers l'avant et au-delà de l'extrémité 13 dans le sens longitudinal 2 de l'atterrisseur.

La poutre 8 est articulée à la cross 22 à l'aide d'un arbre d'articulation 23 situé en un point C situé entre le milieu de cette poutre et les moyens de roulement avant 9.

La position du point C permet le pivotement de la poutre 8 jusqu'à une position où elle est sensiblement perpendiculaire à l'axe longitudinal 2 de l'atterrisseur.

Une bielle 24 est articulée d'une part à la poutre 8 en un point D différent du point d'articulation C et d'autre part au piston 18 sur un bossage 25 réalisé sur ledit piston.

La position du point d'articulation de la poutre est fonction de l'augmentation de la longueur de l'atterrisseur que l'on désire lors de la position cabrée de l'aéronef.

A titre d'exemple, en fixant le point d'articulation C à une distance $x = 0,5$ m du milieu de la poutre, on obtient une augmentation de la longueur de l'atterrisseur en "position sortie" de 1,2 m par rapport à une poutre articulée en son milieu.

On expliquera plus loin en détail la détermination de la position du point d'articulation D de la bielle permettant d'obtenir un effort identique sur les moyens de roulement avant et arrière.

Un compas 26 relie le caisson 4 au cylindre creux 11 pour contrôler la rotation du cylindre creux autour de l'axe longitudinal 2.

On décrira maintenant plus en détail les moyens d'amortissement 7. La tige plongeuse 14 a une extrémité 27 terminée par un diaphragme 28 muni de moyens de laminage 29 et d'une butée 30 apte à se déplacer à l'intérieur de la chambre 21.

Le piston 18 a une tige 31 qui traverse le diaphragme 28 ; cette tige est terminée par un diaphragme 32 apte à coulisser à l'intérieur de la tige plongeuse 14 et qui porte des moyens de laminage 33 et une butée 34.

La paroi 15 de la tige plongeuse 14 a un orifice 35 permettant de remplir la chambre 21 d'un fluide incompressible comme de l'huile définissant un volume 36 et d'un fluide compressible comme un gaz définissant un volume 37.

En fonction des déplacements du piston et du cylindre creux, les moyens de laminage 29,33 assurent la fonction d'amortissement en laminant le fluide incompressible. Ce dernier coopère avec le fluide compressible pour assurer la fonction élastique des moyens d'amortissement 7.

Les moyens de laminage et leur mise en oeuvre ne sont pas décrits plus amplement car ils font partie des connaissance de l'Homme de l'Art.

La tige plongeuse 14 est maintenue au caisson par un organe de rétraction permettant de la faire remonter vers le fond 38 du caisson 4 et à l'intérieur de la cloison interne 39 du caisson 4 ; cet organe est constitué par exemple, par un ensemble bielle 40 et levier 41. Ce dernier est monté pivotant par sa partie médiane par rapport au fond 38 qu'il traverse : il est relié à la structure de l'aéronef par un moyen de relevage connu en soi et non représenté comme par exemple, un vérin ou une bielle élastique. L'ensemble bielle-levier et les moyens de relevage seront appelés par la suite, moyens de rétraction 42.

Le piston 18 est retenu à l'intérieur du cylindre creux 11 par l'extrémité 13 du cylindre creux qui ménage le débattement nécessaire à la bielle 24. Les moyens d'amortissement 7 définissent directement, notamment par les sections de la tige 14 et du piston 18 la position du point d'articulation D de la bielle 24 sur la poutre. Ainsi, pour obtenir un effort identique sur les moyens de roulement avant 9 et arrière 10, on doit avoir : $F1.x = F2.y$.

F1 : effort au point d'articulation C de la poutre 8.

F2 : effort au point D d'articulation de la bielle 24.

x : distance entre le point d'articulation C de la poutre et le milieu 0 de la poutre.

y : distance entre le point d'articulation C de la bielle 24 et le milieu 0 de la poutre.

Cependant : $F1 = (St - Sp). P$

$F2 = Sp. P$

P : pression interne de gonflage dans le volume 37.

d'où $y = ((St - Sp)/ Sp). x = ((St/Sp - 1). x$

La position x du point d'articulation C de la poutre étant fixée, la position y du point d'articulation D du piston dépend de $(St/Sp - 1)$ à savoir des sections relatives du piston 18 et de la tige 14.

En pratique, les trois valeurs relatives se réduisent à un premier mode de réalisation avec $St > Sp$, et à un second mode de réalisation avec $St \leqslant Sp$. Chaque mode de réalisation procure des avantages adaptés aux conditions d'utilisation de l'atterrisseur, avantages qui seront explicités lors de la description du fonctionnement de l'atterrisseur.

La figure 1 représente le premier mode de réalisation, la section St ayant une valeur supérieure à la section Sp ; le cylindre creux 11 est maintenu par exemple à l'intérieur du caisson 4 par une butée 43 réalisée sur le caisson 4 qui coopère avec un épaulement 44 du cylindre creux.

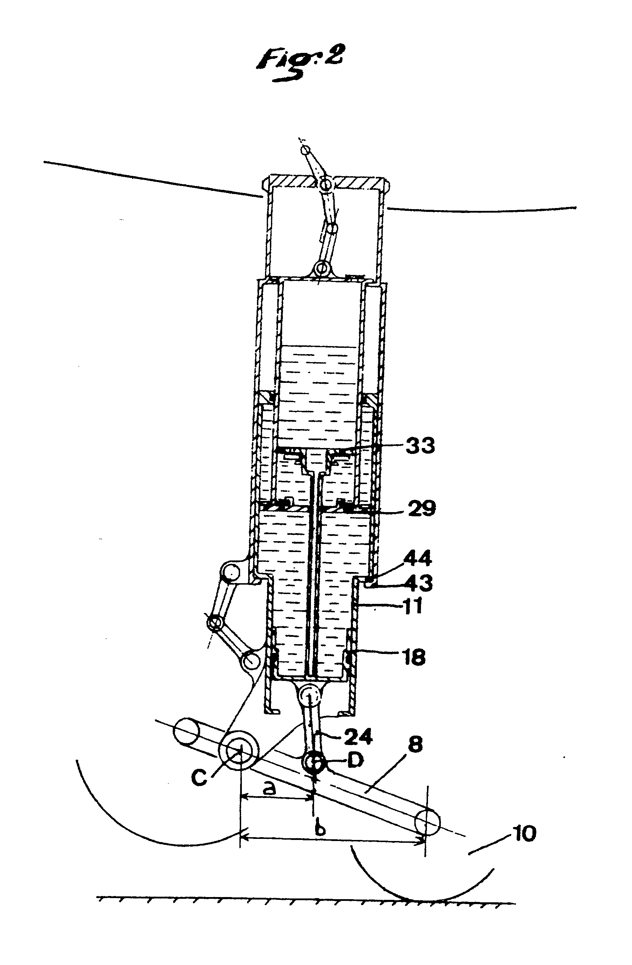

L'atterrisseur conforme au premier mode de réalisation a le fonctionnement suivant. Selon la figure 1, l'atterrisseur est en position "sorti" ; les moyens d'amortissement 7 sont en position détendue sous l'effet du poids des moyens de roulement et de la poutre et la pression à l'intérieur des moyens d'amortissement 7. Le cylindre creux 11 est en contact avec la butée 43 du caisson 4 et le piston 18 est en contact avec l'extrémité 13 du cylindre creux 11. Lors de l'atterrissage (figure 2), l'aéronef prend contact avec le sol par ses moyens de roulement arrière 10. La poutre 8 pivote autour de son point d'articulation C ; la bielle 24 entraînée par ce mouvement de pivotement enfonce le piston 18 à l'intérieur du cylindre creux 11, le fluide incompressible étant laminé par les moyens de laminage 29,33 pour venir comprimer le fluide compressible.

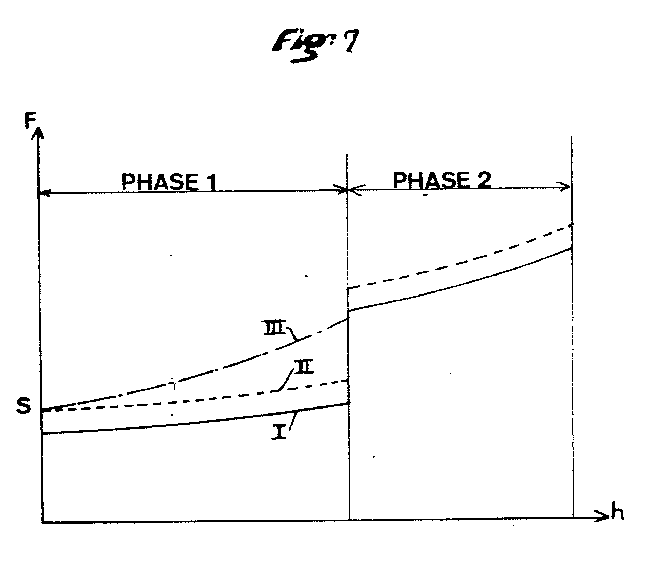

Le piston 18 travaille seul. L'atterrisseur fonctionne selon le mode levier. La courbe I de la phase 1 du graphique de la figure 7 représente les effort agissant sur le moyen de roulement arrière 10 (en ordonée), seul en contact avec le sol en fonction de sa course (en abscisse).

Cet effort est égal à:

$F = Sp. P. b/a$.

a : distance selon un axe perpendiculaire à l'axe longitudinal de l'atterrisseur entre le point C d'articulation de la poutre et le point D d'articulation de la bielle 24 liée au piston 18 (figure 2).

b : distance selon un axe perpendiculaire à l'axe longitudinal de l'atterrisseur entre le point C et le centre des moyens de roulement arrière 10.

Cette phase 1 correspond au fonctionnement en mode à levier. Pendant cette phase, la section St ayant une valeur supérieure à la section Sp, le cylindre creux est soumis à un effort qui l'applique sur la butée 43 du caisson 4 ; l'effort total appliquant le cylindre creux sur sa butée 43 correspond à la pression de la chambre d'air multipliée par la différence des sections St et Sp auquel s'ajoute l'effort en "C" équilibrant les deux autres efforts agissant sur le balancier au niveau du moyen de roulement arrière et de la bielle 24.

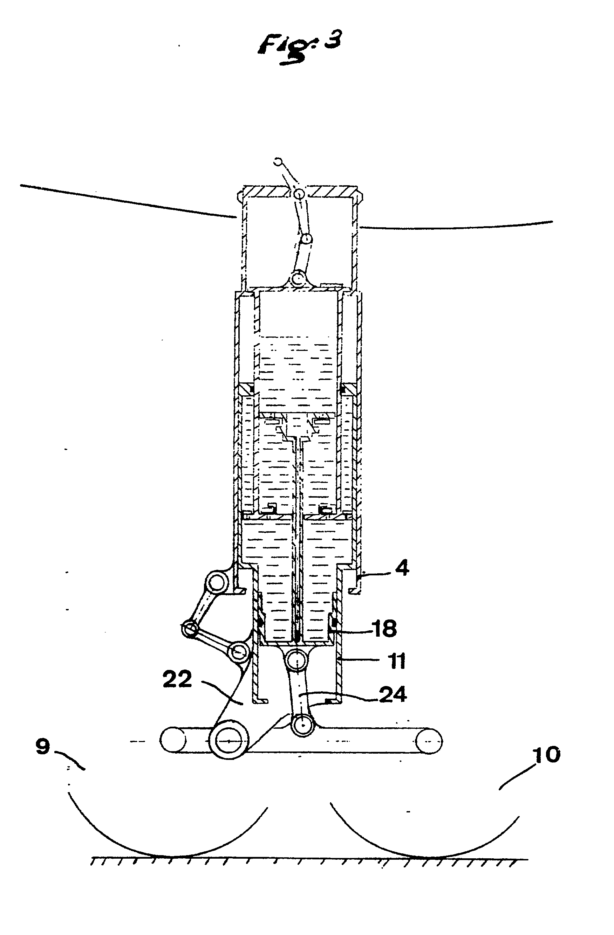

Selon la figure 3, l'aéronef a pris appui au sol par ses moyens de roulement avant et arrière 9,10. La crosse 22 agissant directement sur le cylindre creux 11 fait coulisser ce dernier par rapport au caisson 4, l'atterrisseur fonctionne selon le mode direct. L'effort F dans les moyens d'amortissement ramené au centre des moyens de roulement 9 et 10 correspond à la phase 2 de la courbe I de la figure 7 à savoir :

F = St. P.

Le piston 18 n'intervient plus alors qu'en amortisseur de tangage pour contrôler les mouvements de pivotement de la poutre provoqués par les mouvements de tangage de l'aéronef ou par les dénivellations du sol pendant le roulage. Bien entendu, au cours du décollage les opérations inverses s'effectuent et elles ne seront pas décrites car elles découlent de toute évidence de celles décrites ci-dessus.

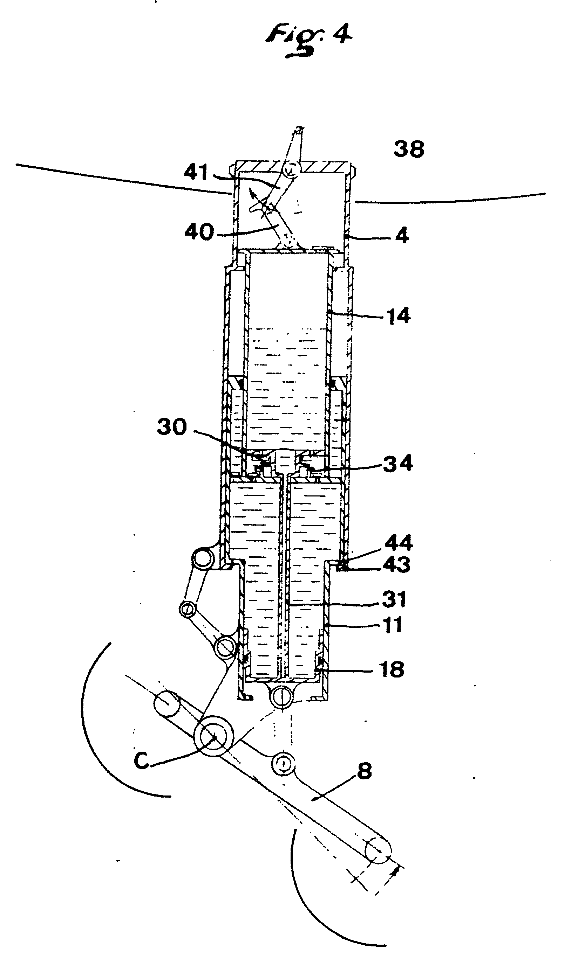

Pour relever l'atterrisseur (figure 4), on agit sur les moyens de relevage afin de casser l'alignement de l'ensemble bielle 40 et levier 41 : la tige plongeuse 14 est alors remontée vers le fond 38 du caisson 4 et la butée 30 de la tige plongeuse vient en contact avec la butée 34 de la tige 31 du piston 8. La tige plongeuse 14 et la tige 31 du piston forment un ensemble rigide qui fait pivoter la poutre 8 autour de son point d'articulation C afin que les moyens de roulement aient un encombrement réduit à l'intérieur de l'aéronef.

Pendant cette rétraction, le cylindre creux 11 est maintenu sur la butée 43 du caisson 4 par un effort correspondant à la pression du fluide compressible multipliée par la différence des sections Sp et St.

La variante du premier mode de réalisation a un principe de fonctionnement absolument identique à celui du premier mode de réalisation.

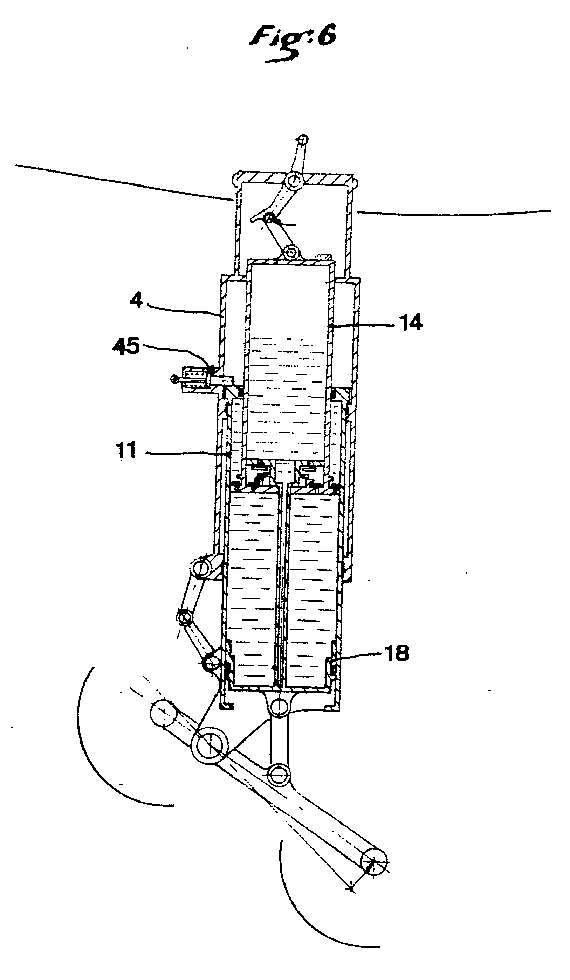

On comprend que si la section Sp du piston est supérieure ou égale à la section de la tige St, le cylindre creux 11 n'est plus maintenu en butée sur le caisson 4 et prend par conséquent une position quelconque lors du relevage de l'atterrisseur. La longueur de l'atterrisseur devant être déterminée de façon précise afin de délimiter le logement de l'atterrisseur à l'intérieur de l'aéronef, le cylindre creux 11 est calé longitudinalement lors du relevage par une butée escamotable 45 comme représentée schématiquement à la figure 6. Cette butée 45 s'escamote lors de l'atterrissage afin que le cylindre creux coulisse librement à l'intérieur du caisson 4.

Un circuit de contrôle non représenté commande la butée 45 dont sa mise en oeuvre et sa réalisation sont connues.

Ce second mode de réalisation de l'atterrisseur avec la section Sp du piston ayant une valeur supérieure ou égale à la section St de la tige plongeuse a pour effet de remonter la courbe I dans sa phase 1 (figure 7) ; la nouvelle courbe II a un effort de seuil statique S augmenté par rapport à la courbe I du fait de l'accroissement de la section de piston Sp.

On remarquera un ressaut entre la phase 1 et la phase 2 de la courbe dû au passage du mode à levier au mode direct (le rapport b/a disparaîssant). Ce ressaut n'a pas d'inconvénient en soit, car il ne perturbe pas le phénomène d'absorption d'énergie.

Cependant, s'il s'avère nécessaire d'augmenter l'effort en fin de mode de fonctionnement en levier (fin de la courbe correspondant à la phase 1, cf courbe III) pour optimiser la détente des atterrisseurs principaux, et par suite, favoriser la phase décollage de l'avion, une deuxième variante de réalisation des moyens d'amortissement à deux chambres de fluide compressible indépendante permet d'aboutir à ce résultat.

On ne décrira pas dans cette deuxième variante les moyens qui restent inchangés par rapport au premier et au second mode de réalisation ; les moyens modifiés du premier et du second mode de réalisation sont désignés par un préfixe 1 supplémentaire.

Les moyens d'amortissement 107 (figure 7) comprennent un cylindre creux 111 pénétré à une première extrémité 112 par une tige plongeuse 114 et à une seconde extrémité par un piston 118 de section Sp.

La tige plongeuse 114 est constituée par un premier tube 150 et un second tube 151 de section St supérieure à la section du premier tube ; les deux tubes sont montés l'un dans l'autre et réunis par un fond 115 lié à des moyens de rétraction 42 déjà décrits.

Le tube 150 traverse par une ouverture 167 une paroi 152 du cylindre creux 111 ; l'ouverture 167 est munie d'un joint d'étanchéité 153 en contact avec l'extérieur du tube 150.

Le cylindre creux 111 entre sa première extrémité 112 étanche et la paroi 152, et l'espace annulaire 154 entre les deux tubes, déterminent une première chambre 121 fermée, variable en fonction des déplacements du cylindre creux 111.

Le tube 151 porte un diaphragme 128 muni de premier moyens de laminage 129 apte à coulisser à l'intérieur du cylindre creux 111.

La paroi 152, le cylindre creux 111 et le piston 118 définissent une deuxième chambre 155 fermée, variable selon les déplacements du piston 118 et indépendante de la première chambre 121.

Un diaphragme 156 du cylindre creux 111 et muni de second moyens de laminage 157 est réalisé à l'intérieur de la deuxième chambre 155.

Le piston 118 a une tige 131 terminée par une butée 134 qui est apte à coopérer avec une butée 130 du tube de plus petite section pour faire remonter les moyens de roulement arrière 10 lors de la rétraction.

Le diaphragme 156 porte un tube creux 158 s'étendant autour de la tige 131 ; ce tube creux a une partie 159 dirigée vers l'extérieur munie de moyens de laminage 160 agissant lors de la détente des moyens d'amortissement et coopérant avec une chambre de détente 161 définie entre le tube creux 158 et une partie 162 du piston s'étendant autour du tube creux.

Le fond 115 de la tige plongeuse porte des orifices 163,164 débouchant respectivement à l'intérieur du tube de plus petite section et du tube de section St.

Les orifices 164,163 permet de remplir respectivement les chambres 121,155 d'un fluide incompressible définissant des volumes 136,165 respectifs et d'un fluide compressible définissant des volumes 137,166 respectifs.

## Revendications

1. Atterrisseur pour aéronef comportant un caisson (4) lié à la structure de l'aéronef, un cylindre creux (11, 111) monté pour coulisser à l'intérieur du caisson par une première extrémité (12, 112) et ayant une seconde extrémité (13, 113) en saillie par rapport au caisson, cette seconde extrémité étant reliée de façon articulée en un premier point d'articulation (C) à une poutre basculante (8) munie de moyens de roulement (9, 10) à chacune de ses extrémités, et des moyens d'amortissement télescopiques (7) disposés dans le caisson et ayant une première extrémité reliée à la structure de l'avion et une seconde extrémité reliée à la poutre basculante (8) par une biellette (24) articulée à cette seconde extrémité des moyens d'amortissement et en un second point d'articulation (D) de la poutre basculante (8) disposé en arrière du premier point d'articulation (C) selon un sens de déplacement de l'aéronef, cette seconde extrémité des moyens d'amortissement pouvant prendre appui sur le cylindre creux au voisinage de la seconde extrémité de celui-ci, caractérisé en ce que les moyens d'amortissement comprennent une tige plongeuse (14, 114) montée au voisinage de la première extrémité du cylindre creux et un piston (18, 118) relié à la biellette (24) et coulissant de façon étanche dans le cylindre creux (11, 111) au voisinage de la seconde extrémité de celui-ci, le piston (18, 118), la tige plongeuse (14, 114), le caisson (4) et le cylindre creux (11, 111) déterminant au moins une chambre (21, 121, 155) fermée variable en fonction des déplacements du cylindre creux et du piston, cette chambre ayant au moins un volume (37, 137, 166) à fluide compressible coopérant avec au moins un volume (36, 136, 165) respectif à fluide incompressible, et des moyens de laminage (29, 129, 157) portés par un premier diaphragme (28) s'étendant en travers de la chambre (21, 121, 155) à une extrémité (27) de la tige plongeuse engagée dans le volume de fluide incompressible.

2. Atterrisseur selon la revendication 1, caractérisé en ce que la tige plongeuse est mobile selon une direction longitudinale du caisson et à une extrémité (15) reliée à la structure de l'avion par des moyens de rétraction (42).

3. Atterrisseur selon la revendication 2 dans lequel la section (Sp) du piston (18) est supérieure ou égale à la section (St) de la tige plongeuse (14) caractérisé en ce qu'il comporte une butée escamotable (45) pour bloquer le cylindre creux (11) lors de la rétraction de l'atterrisseur.

4. Atterrisseur selon la revendication 2 ou la revendication 3, caractérisé en ce qu'à son extrémité (27) portant le premier diaphragme (28), la tige plongeuse est équipée d'une butée (30) et en ce que le piston (18) est relié par une tige (31) à un second diaphragme (32) disposé à l'intérieur de la tige plongeuse et muni de moyens de laminage (33) et d'une butée (34) qui vient en contact avec la butée (30) du premier diaphragme lors d'un relevage de l'aterrisseur par les moyens de rétraction.

5. Atterrisseur selon l'une quelconque des revendications 2 à 4, caractérisé en ce que le piston (118), le cylindre creux (111) et la tige plongeuse (114) déterminent une première (121) et une seconde (155) chambre fermée, la tige plongeuse (114) comprenant un premier (150) et un second (151) tube de sections différentes montés l'un dans l'autre et réunis par un fond (115) lié aux moyens de rétraction (42), le tube de plus petite section traversant de façon étanche une paroi (152) du cylindre creux (111), l'espace annulaire entre le premier et le second tube, et l'espace entre la première extrémité du cylindre creux et la paroi (152) déterminant la première chambre (121), le tube de plus grande section (151) de section (St) portant un diaphragme (128) muni de premier moyens de laminage (129), la seconde chambre étant définie entre la paroi (152) et le piston (118), ce dernier étant relié à une tige (131) traversant un diaphragme (156) du cylindre creux muni de seconds moyens de laminage (157), la tige (131) étant terminée par une butée (134) apte à coopérer avec une butée (130) du tube de plus petite section lors du relevage de l'atterrisseur par les moyens de rétraction (42).

## Patentansprüche

1. Flugzeugfahrwerk umfassend: einen mit der Struktur des Flugzeugs verbundenen Kasten (4), einen mit einem ersten Ende (12, 112) im Kasten verschiebbar gelagerten Hohlzylinder (11, 111), welcher mit einem zweiten Ende (13, 113) über den Kasten vorsteht, wobei das zweite Ende über einen ersten Gelenkpunkt (C) schwenkbar an einem Schwenkbalken (8) angelenkt ist, welcher an seinen beiden Enden mit Rädern (9, 10) ausgestattet ist, sowie eine im Kasten' angeordnete teleskopartige Stoßdämpfereinrichtung (7), die mit einem ersten Ende an der Flugzeugstruktur befestigt und mit einem zweiten Ende mittels eines Schwingarms (24) an dem Schwenkbalken (8) befestigt ist, wobei der Schwingarm (24) am zweiten Ende der Stoßdämpfereinrichtung sowie an einem zweiten Gelenkpunkt (D) des Schwenkbalkens (8) angelenkt ist, welcher hinter dem ersten Gelenkpunkt (C) bezüglich einer Bewegungsrichtung des Flugzeugs angeordnet ist, wobei ferner das zweite Ende der Stoßdämpfereinrichtung sich am Hohlzylinder im Bereich des zweiten Endes desselben abstützen kann, dadurch gekennzeichnet, daß die Stoßdämpfereinrichtung einen Tauchstempel (14, 114) umfaßt, welcher im Bereich des ersten Endes des Hohlzylinders angeordnet ist, sowie einen Kolben (18, 118), der an dem Schwingarm (24) befestigt ist und dicht anliegend im Bereich des zweiten Endes des Hohlzylinders (11, 111) verschiebbar angeordnet ist; wobei der Kolben (18, 118), der Tauchstempel (14, 114), der Kasten (4) und der Hohlzylinder (11, 111) mindestens eine geschlossene Kammer (21, 121, 155) begrenzen, welche abhängig von den Verschiebungen des Hohlzylinders und des Kolbens variabel ist, wobei diese Kammer mindestens ein Volumen (37, 137, 166) mit einem kompressiblen Fluid hat, welches mit mindestens jeweils einem Volumen (36, 136, 165) eines nicht kompressiblen Fluids zusammenwirkt, und ferner Drosselorgane (29, 129, 157), welche an einer ersten Trennwand (28) angeordnet sind, die quer zur Kammer (21, 131, 155) an einem in das inkompressible Fluidvolumen eintauchenden Ende (27) des Tauchstempels verläuft.

2. Fahrwerk nach Anspruch 1, dadurch gekennzeichnet, daß der Tauchstempel in einer Längsrichtung des Kastens bewegbar ist und mit einem Ende (15) über eine Einziehvorrichtung (42) an der Flugzeugstruktur befestigt ist.

3. Fahrwerk nach Anspruch 2, bei dem der Querschnitt (Sp) des Kolbens (18) größer oder gleich dem Querschnitt (St) des Tauchstempels (14) ist, dadurch gekennzeichnet, daß dieser einen zurückziehbaren Haltestift (45) umfaßt, um den Hohlzylinder (11) beim Einziehen des Fahrwerks zu blockieren.

4. Fahrwerk nach Anspruch 2 oder 3, dadurch gekennzeichnet, daß der Tauchstempel an seinem die erste Trennwand (28) tragenden Ende (27) mit einem Anschlag (30) versehen ist, und daß der Kolben (18) über eine Kolbenstange (31) mit einer zweiten Trennwand (32) verbunden ist, welche im Inneren des Tauchstempels angeordnet und mit Drosselorganen (33) und einem Anschlag (34) ausgestattet ist, welcher beim Einziehen des Fahrwerks durch die Einziehvorrichtung zur Anlage am Anschlag (30) der ersten Trennwand kommt.

5. Fahrwerk nach einem der Ansprüche 2 bis 4, dadurch gekennzeichnet, daß der Kolben (118), der Hohlzylinder (111) und der Tauchstempel (114) eine erste (121) und eine zweite (155) geschlossene Kammer begrenzen, wobei der Tauchstempel (114) ein erstes (150) und ein zweites (151) Rohr mit unterschiedlichen Querschnitten umfaßt, von denen eines innerhalb des anderen angeordnet ist und die durch einen an der Einziehvorrichtung (42) befestigten Boden (115) miteinander verbunden sind, wobei das Rohr mit dem kleinsten Querschnitt dicht anliegend durch eine Wand (152) des Hohlzylinders (111) hindurchtritt, wobei ferner der Ringraum zwischen dem ersten und dem zweiten Rohr und der Raum zwischen dem ersten Ende des Hohlzylinders und der Wand (152) die erste Kammer (121) bilden, und wobei das Rohr mit dem größeren Querschnitt (151), d.h. dem Querschnitt (St), eine mit ersten Drosselorganen (129) versehene Trennwand (128) trägt, wobei ferner die zweite Kammer zwischen der Wand (152) und dem Kolben (118) ausgebildet ist und letzterer mit einer Kolbenstange (131) verbunden ist, die durch eine mit zweiten Drosselorganen (157) versehene Trennwand (156) des Hohlzylinders hindurchtritt, und wobei die Kolbenstange (131) in einem Anschlag (134) endet, welcher mit einem Anschlag (130) des Rohres mit dem kleineren Querschnitt zusammenwirken kann, wenn des Fahrwerk durch die Einziehvorrichtung (42) eingezogen wird.

**Claims**

1. An undercarriage for an aircraft comprising a casing (4) which is connected to the structure of the aircraft, a hollow cylinder (11, 111) slidingly mounted within said casing by a first end (12, 112) and having a second end (13, 113) protruding from said casing, said second end being hingedly connected at a first hinge point (C) to a hinged beam (8) equipped with rolling means (9, 10) at each end, and telescopic shock absorber means (7) positioned within said casing and having a first end connected to the structure of the aircraft and a second end connected to said hinged beam (8) by means of a connecting rod (24) hinged to said second end of the shock absorber means and at a second hinge point (D) of the hinged beam (8) positionned backwards said first hinge point (C) with respect to a direction of movement of the aircraft, said second end of the shock absorber means being permitted to bear on the hollow cylinder in the vicinity of the second end thereof, characterized in that the shock absorber means include a plunger stem (14, 114) mounted in the vicinity of said first end of the hollow cylinder and a piston (18, 118) connected to the connecting rod (24) and tightly sliding within the hollow cylinder (11, 111) in the vicinity of the second end thereof, the piston (18, 118), the plunger stem (14, 114) the casing (4) and the hollow cylinder (11, 111) determining at least one closed chamber (21, 121, 155) having a variable volume as a function of the displacements of the hollow cylinder and the piston, this chamber having at least one volume (37, 137, 166) of compressible fluid cooperating with at least one respective volume (36, 136, 165) of incompressible fluid, and throttling means (20, 129, 157) carried by a first diaphragm (28) extending transversely to the chamber (21, 121, 155) at one end (27) of the plunger stem engaged within the volume of incompressible fluid.

2. An undercarriage as in claim 1 characterized in that the plunger stem is movable according to a longitudinal direction of the casing and has one end (15) connected to the structure of the aircraft by means of retraction (42).

3. An undercarriage as in claim 3 wherein the section (Sp) of the piston (18) is higher or equal to the section (St) of the plunger stem (14) characterized in that it comprises a retractable stop (45) for locking the hollow cylinder (11) upon retraction of the undercarriage.

4. An undercarriage as in claim 2 or 3 characterized in that at its end (27) carrying the first diaphragm (28), the plunger stem is equipped with a stop (30) and in that the piston (18) is connected by a rod (31) to a second diaphragm (33) disposed within the plunger stem and provided with throttling means (33) and with a stop (34) which contacts the stop (30) of the first diaphragm upon raising of the undercarriage by the means of retraction.

5. An undercarriage as in any one of the claims 2 to 4, characterized in that the piston (118), the hollow cylinder (111) and the plunger stem (114) define a first closed chamber (121) and a second closed chamber (155), the plunger stem (114) comprising a first tube (150) and a second tube (151) of different cross-sections mounted in one another and joined by a base (115) connected to means of retraction (42), the tube of smaller cross-section passing tightly through one wall (152) of the hollow cylinder (111), the annular gap between the first tube and the second, and the gap between the first end of the hollow cylinder and the wall (152) defining the first chamber (121), the tube of larger cross-section (151) of cross-section (St) carrying a diaphragm (128) equipped with first throttling means (129), the second chamber being defined between the wall (152) and the piston (118) the latter being connected to a rod (131) passing through a diaphragm (156) in the hollow cylinder, equipped with second throttling means (157), the rod (131) terminating in a stop (134) suited to cooperating with a stop (130) on the tube of smaller cross-section upon raising of the undercarriage by the means of retraction (42).

# Fig:1

# Fig. 2

## Fig. 3

*Fig. 4*

# Fig:5

# Fig:6

Fig. 7

Fig. 8